# EUROPEAN PATENT SPECIFICATION

(11) **EP 1 257 965 B1**
(45) Date of publication and mention of the grant of the patent: **21.04.2004**
(21) Application number: 01923563.9
(22) Date of filing: 09.02.2001
(51) Int. Cl.: G06F 3/033, G06K 11/18

(54) **ELECTRONIC PEN WITH INK ON/OFF FUNCTION AND PAPER TOUCH SENSING**
ELEKTRONISCHER GRIFFEL MIT EIN/AUS TINTENFUNKTION UND KONTAKTERKENNUNGSFUNKTION MIT DEM PAPIER
CRAYON ELECTRONIQUE A FONCTION ARRIVEE/COUPURE D'ENCRE ET DETECTION DE CONTACT PAPIER

(30) Priority: 16.02.2000 US 182742 P; 16.03.2000 US 190343 P; 28.03.2000 US 192662 P; 31.10.2000 US 703494
(43) Date of publication of application: 20.11.2002
(73) Proprietor: TELEFONAKTIEBOLAGET LM ERICSSON (publ), 126 53 Stockholm (SE)
(72) Inventor: RYDBECK, Nils, Cary, NC 27511 (US)
(74) Representative: O'Connell, David Christopher
(86) International application number: PCT/EP2001/001404
(87) International publication number: WO 2001/061636

(56) References cited:
- WO-A-94/10652
- GB-A- 2 306 669
- US-A- 5 477 012

## Description

### REFERENCE TO EARLIER FILED PROVISIONAL APPLICATIONS

This patent application claims the benefit of priority from, co-pending U.S. Provisional Patent Application Serial Nos. 60/182,742, filed on February 16, 2000, 60/190,343, filed on March 16, 2000, and 60/192,662, filed on March 28, 2000.

### CROSS REFERENCE TO RELATED APPLICATION

The present application for patent is related to the subject matter disclosed in U.S. Patent Application Serial Nos. 09/703497(Attorney Docket No. 34650-566PT), entitled "Specially Formatted Paper Based Applications of a Mobile Phone"; 09/703503(Attorney Docket No. 34650-569PT), entitled "Method and System for Using an Electronic Reading Device as a General Application Input and Navigation Interface"; 09/703704(Attorney Docket No. 34650-578PT), entitled "Predefined Electronic Pen Applications in Specially Formatted Paper"; 09/703506 (Attorney Docket No. 34650-579PT), entitled "A System and Method for Operating an Electronic Reading Device User Interface"; 09/703325 (Attorney Docket No. 34650-601PT), entitled "Method and System for Using an Electronic Reading Device on Non-paper Devices"; 09/703486(Attorney Docket No. 34650-602PT), entitled "Multi-layer Reading Device"; 09/703351 (Attorney Docket No. 34650-604PT), entitled, "Method and System for Configuring and Unlocking an Electronic Reading Device"; 09/703485 (Attorney Docket No. 34650-606PT), entitled "Printer Pen"; 09/703492 (Attorney Docket No. 34650-607PT), entitled "Method and System for Electronically Recording Transactions and Performing Security Function"; 09/703480 (Attorney Docket No. 34650-654PT), entitled "Method and System for Handling FIFO and Position Data in Connection with an Electronic Reading Device"; 09/703479 (Attorney Docket No. 34650-655PT), entitled "Hyperlink Applications for an Electronic Reading Device"; 09/703464 (Attorney Docket No. 34650-656PT), entitled "Measuring Applications for an Electronic Reading Device"; 09/703321 (Attorney Docket No. 34650-657PT), entitled "Method and System for Controlling an Electronic Utility Device Using an Electronic Reading Device"; and 09/703481(Attorney Docket No. 34650-658PT), entitled "Positioning Applications for an Electronic Reading Device"; and 09/703326 (Attorney Docket No.34650-673PT), entitled "Method for Sharing Information Between Electronic Reading Devices"; and in U.S. Provisional Patent Application Serial Nos. 60/244775 (Attorney Docket No.34650-671PL), entitled "Electronic Pen for E-Commerce Implementations"; and 60/244803 (Attorney Docket No.34650-672PL), entitled "Electronic Pen Help Feedback and Information Retrieval.

### BACKGROUND OF THE INVENTION

### Technical Field of the Invention

The present invention relates in general to the communications field, and in particular to an interaction of an electronic reading device with an address pattern.

### Description of Related Art

Numerous man-machine-interfaces (MMIs) exist for accepting user input and controlling user interaction with desktop and portable computers, personal digital assistance (PDAs), mobile phones, and other types of electronic devices. For example, a keyboard can be used to accept typed input and other types of commands, a mouse or a track-ball can be used to provide relative motion input as well as various types of point-and-click selections, a keypad can be used to provide input of numerical data and functional commands, navigational keys, or scrolling wheels can be used for scrolling lists or otherwise repositioning a cursor, voice recognition can be used for performing certain operations, and various types of touchpads or touchscreens can be used to provide absolute positional coordinate inputs. Each type of mechanism for accepting input and for supporting user interaction has benefits and disadvantages in terms of size, convenience, flexibility, responsiveness, and easy of use. Generally, the selection of a particular type of MMI is dependent upon the function of the application and the degree and type of interaction required.

The US 5,477,012 reference represent the basis for the preambles of claims 1 and 15 and discloses the use of a surface formatted with position-related coding means for indicating X-Y coordinates capable of reflecting a frequency of light. The stylus (pen) has a light source of a frequency for illuminating the surface. The frequency of light is absorbed by the surrounding surface and reflected back into the stylus onto a charge-coupled device (CCD) chip located within the stylus. The information is sent to a computer for processing and finally output to the user. The stylus is composed of a pen shaped optical conduit. At the lower scanning end is a replaceable and/or retractable writing element connected to a pressure sensitive on/off switch. A microcomputer is also located within the stylus which interfaces the CCD chip and other components. The upper end of the stylus comprises a wireless transmitter for communicating with other devices.

The GB 2 306 669 reference discloses a hand-held pen-like instrument that can write on paper documents, simultaneously sense the writing, and interpret and enter the written markings in the electronically coded document. The pen-like instrument (PI) comprises a writing tip that deposits ink on a paper surface by contact. Furthermore, the PI has strain gauges connected to the shaft of the pen tip to record the forces applied to the tip by measuring the force exerted on four pairs of orthogonal strain gauges. The PI has position sensor that determines the position of the pen based on motion. Additionally, the PI incorporates a battery power source, and a communication link to transmit transducer data to a base unit for the conversion of transducer data to binary digital information.

With the ever expanding capabilities and availability of applications both on the Internet and the area of wireless technology, there continues to be a need to develop and provide new MMIs for accepting input and interacting with users. In particular, some of the existing technologies suffer from drawbacks or limitations, such as size and flexibility, that make them impractical and/or inconvenient to use in some situations. For example, MMIs that are typically used with mobile phones are not very fast and are not particularly user friendly, especially for sending long SMS messages or changing a lot of data in the device. Typically, long messages are entered using T9 (i.e., word predictive input), a keyboard attached to the phone (i.e., a chatboard), a pen on a touch sensitive screen, or a numeric keypad where each key has to be pressed more than once to enter certain letters. Each of these alternatives suffer from a lack of speed and/or user-friendliness. By expanding the range of possible MMIs for supporting user interaction, application developers and end-users can have greater flexibility in the selection of input devices. Preferably, any such new mechanisms will provide increased flexibility and will maximize user convenience. In addition, the development of new mechanisms for interacting with users can expand the realm of potential applications.

For example, while a keyboard typically provides a great deal of flexibility, particularly when it is used in connection with a mouse, a touchscreen, or other navigational device, its size makes it inconvenient in many cases, especially in the wireless context.

### SUMMARY OF THE INVENTION

The present invention comprises a method and system for entering information electronically using an electronic pen. The electronic pen is used in connection with a specially formatted surface that includes an address pattern designed such that a substantially exact position of the electronic pen relative to the address pattern can be determined by examining only a small portion of the overall address pattern. In particular, the electronic pen includes an optical detector for detecting sequential positions of the electronic pen. The electronic pen includes a touch sensor for detecting whether a tip of the electronic pen is in contact with the specially formatted surface. When the electronic pen is in contact with the surface, the detected positional data can be forwarded to a processor for determining a relative position of the electronic pen and/or can be stored in a memory. Furthermore, the touch sensor is sensitive to varying amounts of force and can be used to select a particular position on the specially formatted surface when an amount of force greater than some predetermined threshold is detected.

In another aspect of the invention, the electronic pen can include a writing means that can be selectively activated and deactivated. By using the electronic pen with the writing means in an activated mode, handwritten messages or drawings can be both written on the specially formatted surface and electronic representations of the messages or drawings can be stored or otherwise utilized by the system. On the other hand, by using the electronic pen with the writing means in a deactivated mode, electronic representations of handwritten messages or drawings can be generated while writing on a reusable data entry sheet. Furthermore, when the electronic pen also includes the touch sensor, contact between the tip of the electronic pen and the surface can preferably be detected regardless of whether the electronic pen is in an activated or deactivated writing mode.

### BRIEF DESCRIPTION OF THE DRAWINGS

For a more complete understanding of the present invention, reference is made to the following detailed description taken in conjunction with the accompanying drawings wherein:
FIGURE 1 is a block diagram of a system in which an electronic pen can be used as an input device;
FIGURE 2 is a schematic diagram of a system for supporting use of the electronic pen described in connection with FIGURE 1;
FIGURE 3 is an illustration of the protocol stacks that can be used in the case of local communications between the electronic pen and the electronic pen client;
FIGURE 4 is an illustration of protocol stacks that can be used when the electronic pen and the electronic pen client communicate with one another via an Internet connection;
FIGURE 5 is an illustration of a protocol stack for communications between the electronic pen client and each of the supporting entities when the electronic pen client is not located within a server on the Internet;
FIGURE 6 is an illustration of protocol stacks that are used for communications between the electronic pen client and each of the supporting entities when the electronic pen client is located on the Internet;
FIGURE 7 is a block diagram of the electronic pen logic that handles positions, strokes, actions, and grid descriptions;
FIGURE 8 is a block diagram of a state machine for the electronic pen control block shown in FIGURE 7;
FIGURE 9 is a block diagram of a state machine for the electronic pen client;
FIGURES 10A-10C are a message flow and signaling diagram illustrating the operation of the electronic pen system 2 shown and discussed in connection with FIGURE 2;
FIGURE 11 is an illustration of a reusable calendar reentry sheet;
FIGURE 12 is an illustration of an example of a reusable phone settings entry sheet; and
FIGURES 13A and 13B are illustrations of an electronic pen 10 having a paper touch sensor.

### DETAILED DESCRIPTION OF THE INVENTION

The present invention relates to a system in which an electronic reading device, such as an electronic pen, an electronic mouse, or a hand scanner, works in cooperation with an address pattern (e.g., a specially formatted paper) to provide for a detection of a location of the electronic reading device over the address pattern. For instance, a pattern of dots can be defined such that, by examining a very small portion of the pattern, a precise location in the overall pattern can be determined. In fact, it is possible to define a pattern that has the size of 73,000,000,000,000 A4 pages, which is equivalent to half the size of the entire United States. Portions of the pattern can be placed on sheets of paper or other objects.

Then, using an electronic scanner pen that can detect the dots in the pattern, it is possible to detect the location of the pen with respect to the unique pattern. For example, when such a pen is used in connection with a specially formatted paper, the pen can detect its position (e.g., using a built in camera) by detecting a 3 mm by 3 mm portion of the pattern. By taking approximately 100 pictures per second, the pen is capable of determining its exact position to within 0.1 mm or less. This system can be used to provide user input, to facilitate user interaction, or to store handwritten notes or drawings. Moreover, by associating portions of the overall pattern with certain applications, such a system can be used to interact with wide variety of applications.

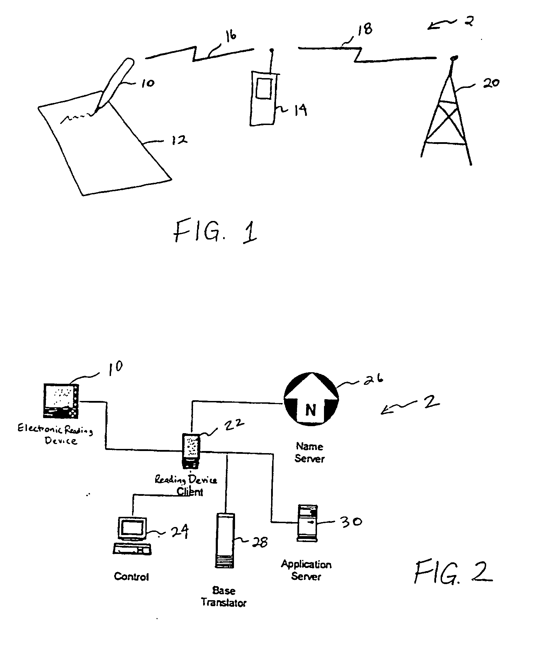

Referring now to FIGURE 1, there is illustrated an example of a system 2 in which an electronic pen can be used as an input device. The electronic pen includes an ink cartridge and is capable of writing in a typical fashion. The electronic pen 10, however, includes some type of sensor (e.g., a built-in camera) that is used for detecting an address pattern on a specially formatted piece of paper 12. In particular, the paper 12 is formatted with a small portion of a large address pattern such that when the electronic pen 10 is used to write on or otherwise make marks on the paper 12, the writings or markings can be electronically detected and stored.

As an example, the paper 12 might constitute a form that can be used for sending an e-mail. Thus, the paper 12 might include a space for writing in the e-mail address of an intended recipient, a space for writing a subject of the e-mail, and a space for writing the body of the e-mail. As the electronic pen 10 is used to fill in each of the spaces, the position and movement of the electronic pen 10 on the paper 12 ca:i be determined by repeatedly detecting the current x, y coordinates of the pen 10 (e.g., at rate of 100 frames per second). The markings can then be converted into ASCII text using an appropriate handwriting recognition program. Once the user completes the form, the e-mail can be sent, for example, by checking a send box at a predetermined location on the paper 12.

Preferably, the coordinate information collected by the pen 10 is sent by a short range radio transmitter in the electronic pen 10 to a nearby mobile station 14 using a short range radio interface 16 such as a local wireless radio link (e.g., a local wireless radio link supported by Ericsson's Bluetooth™ wireless communications technology). Alternatively, instead of using a mobile station 14, the coordinate information could also be sent to a desktop or portable computer, a personal digital assistant (PDA), a television, or a Bluetooth terminal. Moreover, instead of using a local wireless radio link, other types of local wireless links, such as inductive coupling and infrared light; other types of radio links; or wired transmission media, such as a cable can also be used. The information can then be forwarded via an appropriate link, such as a cellular air interface 18, to a base station 20 or other network node.

Referring now to FIGURE 2, there is illustrated a schematic diagram of a system 2 for supporting use of the electronic pen 10 described in connection with FIGURE 1. Throughout the subsequent discussion, the system 2 is described primarily in connection with an electronic pen 10. It will be understood, however, that the invention and the underlying system 2 can instead use any type of electronic reading device, such as an electronic pen, an electronic mouse, or a hand scanner. As shown in FIGURE 2, the system 2 includes six different entities, including the electronic pen 10, electronic pen client 22, a control node 24, a name server 26, a base translator 28, and an application server 30. Although these various devices are described and depicted separately, it is also possible to combine two or more of the entities into the same device (e.g., the electronic pen 10 and electronic pen client 22 can be contained in the same device).

The electronic pen 10 is responsible for detecting positions on the address pattern, producing actions, and sending information to the electronic pen client 22. In addition to being able to leave pen markings, some electronic pens can also have the ability to produce other types of output, such as sound, vibration, or flashing lights. The electronic pen 10 includes a memory for storing a current grid, which comprises information relating to an area of the address pattern that is near the most recently detected position of the electronic pen 10. When the electronic pen 10 is loaded with the current grid, it knows what actions to take based on the positions that are read from the address pattern. When the electronic pen 10 is first turned on or when it moves to an area outside of the current grid, the electronic pen 10 must first request a new grid description before it can continue processing information. In such a situation, the electronic pen 10 requests a new grid description from the electronic pen client 22.

The electronic pen client 22 can be located in a mobile station 14, in a PDA, in a desktop or portable computer, in the electronic pen 10 itself, in a server somewhere on the Internet, or in another device. The electronic pen client 22 serves as the center of communications in the overall system 2. In particular, the electronic pen client 22 receives new grid requests and action requests from the electronic pen 10 and responds to these requests by contacting an appropriate entity within the overall system 2 to properly respond to the request from the electronic pen 10. Furthermore, when the electronic pen 10 is being used in connection with a particular application, the electronic pen client 22 can store the application and/or any corresponding data received from the electronic pen 10 to facilitate processing and use of the application.

The name server 26 is used for translating a detected position on the address pattern into a Uniform Resource Location (URL) associated with that position. Different portions of the address pattern are assigned to different applications. Neither the electronic pen 10 nor the electronic pen client 22, however, is aware of all of the different applications and the particular areas assigned to each application. Thus, when the electronic pen 10 detects a new or unknown position, it forwards the position information to the electronic pen client 22, which in turn sends the information to the name server 26. The name server 26 then identifies an application associated with the received position and retrieves a URL where a description of the particular application can be found. The retrieved URL can then be used by the electronic pen client 22 to retrieve the application description.

As an alternative, the name server 26 can comprise a global name server that keeps track of a location, in the form of URLs to local name servers, where more information can be found about different addresses in the pattern. Similarly, each local name server can use other local name servers to obtain the necessary information, i.e., to convert a position into a URL where an application description can be found. At the lowest level, the local electronic pen client should know all the paper addresses that are within a specific application or applications.

There are some services that should be available in the overall system 2 for which it is inconvenient or not feasible to support such services in the electronic pen 10 or the electronic pen client 22. In such a case, the base translator 28 can be used to support the services. For example, the base translator 28 might contain handwriting recognition software for converting pen actions into text or for converting pen actions into a predefined set of symbols. When such services are needed, the electronic pen client 22 can send a request to the base translator 28 along with the necessary data, and the base translator 28 can perform the requested service.

Another entity in the system 2 is a control node 24. The control node 24 is used for responding to actions in a standardized way. For example, the control node 24 can be used to respond to certain generic functions, such as "cancel" or "submit" functions, in a consistent manner without regard to the particular application that is currently active.

In addition, the control node 24 is used for creating streaming-like applications. For instance, some applications might require that the positions on the address pattern that are detected by the electronic pen 10 be immediately sent, upon detection, to the electronic pen client 22 for use by the application (i.e., the electronic pen 10 does not wait to transmit the position data until a complete stroke is detected or until a "send" field is touched). One example is an application that is used to control an industrial robot in a warehouse. In such a case, the application description that is loaded onto the electronic pen server 22 can include instructions that all positions be streamed to a control node 24. As a result, the control node 24 can receive the positions in real time and can control the robot without waiting for the form (i.e., the current grid) to be completed. Thus, the control node 24 can perform a real-time translation from detected positions to a responsive action, such as moving an object (e.g., a robot, a valve, etc.) or controlling a process.

The application server 30 is a regular web or wireless application protocol (WAP) server that supports an application associated with a particular area of the address pattern. The application server 30 stores an application description and provides the application description to the electronic pen client 22 upon request. In addition, the application server 30 receives input data from the electronic pen 10 via the electronic pen client 22. For example, the application description might define a number of data entry areas on a form. Thus when data is entered on the form by the electronic pen 10, the data is received by the electronic pen client 22, converted into text using handwriting recognition software, and forwarded to the application server 30, which stores the data or otherwise processes the data in accordance with the function of the application.

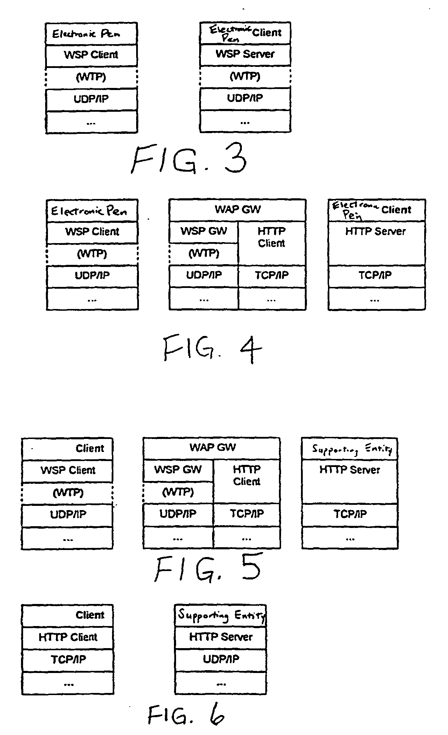

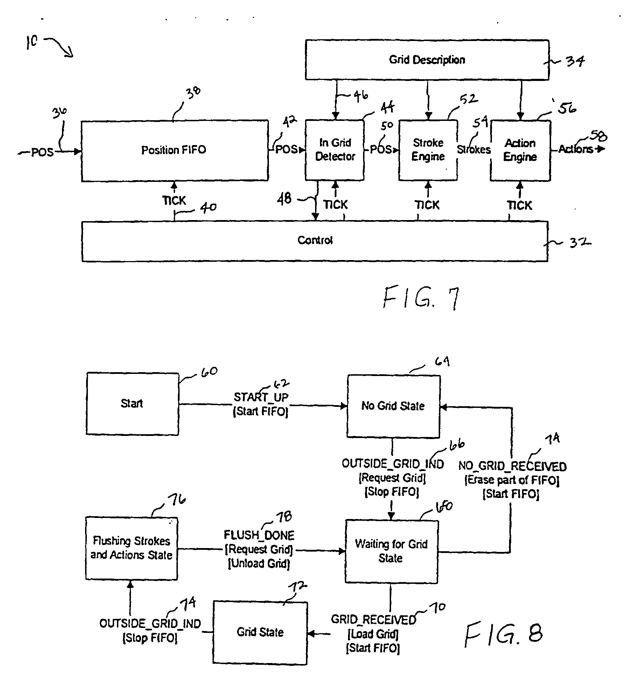

Referring now to FIGURES 3 through 6 there are illustrated various examples of protocol stacks that can be used for communicating between the entities shown in FIGURE 2. Generally, however, such protocols apply however, only if the two communicating entities are implemented in different devices. If two or more entities are combined into one device, a proprietary protocol can be used to communicate between the entities. FIGURE 3 illustrates the protocol stacks that can be used in the case of local communications (e.g., using Bluetooth™) between the electronic pen 10 and the electronic pen client 22. If, on the other hand, the electronic pen 10 and the electronic pen client 22 communicate with one another via an Internet connection, the protocol stacks depicted in FIGURE 4 will be used. FIGURE 5 illustrates a protocol stack for communicating between the electronic pen client and each of the supporting entities, such as the name server 26, the control node 24, the base translator 28, and the application server 30, when the electronic pen client 22 is not contained within a server on the Internet (e.g., such as when the electronic pen client 22 is located in a mobile phone 14). Finally, FIGURE 6 depicts the protocol stacks that are used when the electronic pen client 22 is located on the Internet.

There are a number of procedures that can be used by the various entities in the system 2 to allow the system to operate properly. When the electronic pen 10 detects a position on the address pattern that is not within its currently loaded grid or when the electronic pen 10 has no currently loaded grid, the electronic pen 10 initiates a new grid procedure. The new grid procedure involves sending a new grid request object to the electronic pen client 22. The new grid request object contains the newly detected position, a description of the actions that the electronic pen 10 can natively support, and a description of the output signals that the electronic pen 10 supports. The reply to a new grid request object is a grid description, which can be provided by the electronic pen client 22 from its own internal memory or from the information provided by an application server 30. Generally, the electronic pen client 22 extracts the grid description from an application description received from the application server 30. The grid description should only contain action-field-types that the electronic pen 10 has indicated that it natively supports, which means that the electronic pen client 22 in some cases should convert the extracted grid description into a format that the electronic pen 10 can understand.

In some situations, it may be necessary for the electronic pen 10 to unload its current grid at the request of the electronic pen client 22. In such a case, the electronic pen client 22 sends an empty grid description to the electronic pen 10, thereby causing the electronic pen 10 to unload its current grid. This can occur, for example, when a particular application is complete or when a new grid description request received from the electronic pen 10 cannot be fulfilled, such as when the position received from the electronic pen 10 is not registered in the name server 26.

Another similar message is the empty grid description with a grid exception. When the electronic pen 10 requests a new grid description from the electronic pen client 22, the electronic pen client 22 uses the detected position specified in the request to ask the name server 26 for a URL where the application description can be found. If no URL is returned, the electronic pen client 22 can send an empty grid description with a grid exception to the electronic pen 10. The grid exception comprises a rectangle or other shape indicating the area around the detected position where no registered applications can be found. Preferably, the indicated area is as large as possible so that the electronic pen 10 and/or electronic pen client 22 know the extent of the surrounding area that is unassigned and do not have to repeatedly send requests to the name server 26. Thus, the empty grid description with a grid exception causes the electronic pen 10 to unload its current grid and also informs the electronic pen 10 of an area surrounding the detected position that can essentially be ignored because its is not associated with any application.

The procedure that is used when the electronic pen 10 detects a new position is a find application description location procedure. This procedure is used by the electronic pen client 22 to translate a detected position received from the electronic pen 10 into a URL where a description of an application corresponding to that position can be found. The procedure involves sending a request from the electronic pen client 22 to the name server 26 containing identification of the detected position. The name server 26 responds by sending a reply to the electronic pen client 22 containing a URL where an application description can be found or, if the detected position is not registered in the name server 26, containing an indication that no associated application is known to exist.

Once the electronic pen client 22 knows the URL where an application description can be found, the electronic pen client 22 can initiate a get application description procedure, which allows the electronic pen client 22 to retrieve the application description from the application server 30. In particular, the electronic pen client 22 sends an application description request containing a unique ID for the requesting electronic pen 10 and/or electronic pen client 22 to the application server 30 located at the URL address provided by the name server 26. In response, the application server 30 provides an application description object to the electronic pen client 22, which loads the application onto the electronic pen client 22. The application description object is similar to an HTML form with some additions and modifications.

Furthermore, the application description object can be sent from the application server 30 to the electronic pen client 22 in response to a submitted form (i.e., a submission of one completed form might automatically result in a new form being loaded onto the electronic pen client 22). A related procedure is the application submit procedure, which is used by the electronic pen client 22 when the user of the electronic pen 10 selects a "submit" field in a form. In response to the selection of the "submit" field, the electronic pen client 22 will submit the form content in accordance with instructions received in the application description. Typically, the electronic pen client 22 will submit the form content, in the same way as a regular web browser, to a URL specified in a form tag of the application description.

When an action that can be handled by the electronic pen 10 itself is generated, an action procedure is initiated by the electronic pen 10 to send an action request object to the electronic pen client 22. If the electronic pen client 22 cannot translate the action into a field value itself, the electronic pen client 22 further forwards the request to a base translator 28 for translating the action into a field value. In response to the action request object, an action reply object is sent from the electronic pen client 22 to the electronic pen 10. The action reply object contains output information that indicates to the electronic pen 10 which outputs signals to use. The output information, however, cannot be of type that the electronic pen 10 has previously indicated that it does not support. In some instances, the action reply object might contain a new grid description. In such a case the electronic pen 10 will unload its current grid description and load the new grid description. Similarly, if the action reply object contains an empty grid description, the electronic pen 10 will simply unload its current grid description.

The action request object is also sometimes used to specify actions that should be processed by the control node 24. In this instance, the electronic pen client 22 initiates a control procedure by forwarding the received action to the appropriate control node 24. As a result, the control node 24 sends an action reply object to the electronic pen client 22.

The operation of the electronic pen 10 will now be discussed in greater detail. Each electronic pen 10 has a unique pen ID, which is sent to the application server 30 when an application description is requested. The electronic pen ID allows the application to identify the particular user that is using the application and to distinguish between multiple concurrent users of the same application, such as when different electronic pens 10 are being used in connection with separate sheets of paper that each contain the same portion of the address pattern.

Referring now to FIGURE 7, there is illustrated a block diagram of the electronic pen processor logic that handles positions, strokes, actions, and grid descriptions for the electronic pen 10. The electronic pen 10 includes a control block 32 for controlling the operation of the electronic pen 10. A grid description block 34 represents a memory location that stores a current grid description. At any given time, the electronic pen 10 can be in either of two modes. In a first mode, a grid description is loaded, while in a second mode, the grid description block 34 is not loaded with a current grid description.

As the electronic pen 10 moves across an address pattern, the electronic pen 10 periodically (e.g., every 1/100 of a second) detects a position by detecting all of the dots within, for example, a 3mm by 3mm area. Each detected position is forwarded (as indicated at 36) to a position first in first out (FIFO) block 38, which acts as a buffer for temporarily storing the detected positions. The clocking of the position FIFO block 38 is controlled by the control block 32 (as indicated at 40).

The detected position is fed from the position FIFO block 38 (as indicated at 42) to an in grid detector 44. The in grid detector 44 retrieves data from the grid description block 34 (as indicated at 46) and determines whether the received position is within the loaded grid description. If not, the in grid detector 44 notifies the control block 32, which in turn initiates a request for a new grid. When the detected position is within the current grid, the position is then sent (as indicated at 50) from the in grid detector 44 to a stroke engine 52. The stroke engine 52 converts the received positions into strokes, which are then sent (as indicated at 54) to an action engine 56. A complete stroke is created when the electronic pen 10 is lifted from the paper or when it moves outside of the grid field where the stroke began. Finally, the action engine 56 converts the received stroke into an action that can be sent to the electronic pen client 22. By using grid action-field-types, the action engine knows which type of action to produce for a specific grid field.

Referring now to FIGURE 8, there is illustrated a block diagram of a state machine for the control block 32 shown in FIGURE 7. In this figure, events are indicated in capital letters, while tasks associated with the event are depicted in brackets. The process starts at step 60 with a start up event 62, which causes the position FIFO block 38 to begin receiving detected positions. Initially, the electronic pen 10 is in a no grid loaded state 64, which means that the electronic pen 10 does not have a grid loaded in the grid description block 34. As a result, the control block 32 generates an outside grid indication 66, thereby causing the electronic pen 10 to send the request for a new grid description to the electronic pen client 22 (i.e., in accordance with the new grid procedure) and to stop the FIFO buffer 38. At this point, the electronic pen 10 enters a waiting for grid state 68.

Once the new grid has been received (as indicated at 70), the control block 32 moves to a grid loaded state 72, at which time the new grid is loaded into the grid description block 34 and the position FIFO block 38 resumes operation. On the other hand, if no grid is received (as indicated at 74), at least a portion of the positions stored in the FIFO buffer 38 are erased. Which part of the FIFO buffer to erase is determined by the grid exception area, if any, in the received empty grid description. Accordingly, all positions stored in the FIFO buffer 38 that are within the grid exception area should be erased. If no grid exception is received, the stroke associated with the position is erased. In addition, the FIFO block 38 resumes operation and the control block 32 moves into the no grid loaded state 64.

When the control block 32 is in the grid loaded state 72, a current grid is loaded in the grid description block 34. While the control block 32 remains in this state 72, the position FIFO block 38 continues to receive detected positions and passes them on to the stroke engine 52 and action engine 56. Actions produced by the action engine 56 are sent (as indicated at 58) to the electronic pen client 22 (i.e., in accordance with the action procedure described above).

At some point, an outside grid indication 74 may be received by the control block 32 from the in grid detector 44. The outside grid event 74 causes the FIFO block 38 to stop generating new positions. In addition, the electronic pen 10 enters a flushing stroke and action state 76 wherein the strokes that are currently in the stroke engine 52 and the actions that are currently in the action engine 56 are flushed to the electronic pen client 22. Once the stroke engine 52 and action engine 56 have been fully flushed (as indicated at 78), the electronic pen 10 sends a request for a new grid to the electronic pen client 22 and unloads the current grid. The control block 32 then moves back into the waiting for grid state 68.

As a general matter, the electronic pen 10 may be capable of supporting various different types of output, including audio, such as warning tones; visual, such as a flashing light; tactile, such as vibration; and/or ink. In some cases, it might be desirable to allow the user of the electronic pen 10 to turn off the ink of the pen 10, such as when the electronic pen is being used on a portion of the address pattern that is public or shared or when the user wants to be able to reuse the current sheet of paper.

The electronic pen client 22 will now be described in greater detail. Generally, the electronic pen client 22 is analogous to a regular web browser. It is responsible for loading applications from application servers 30 and for handling input form the electronic pen 10. Preferably, the electronic pen client 22 is located in a separate device from the electronic pen 10 itself. This is because it is desirable to minimize the size and power supply requirements of the electronic pen 10, which will likely be adversely affected by the processing resources and memory necessary to support the functions of the electronic pen client 22.

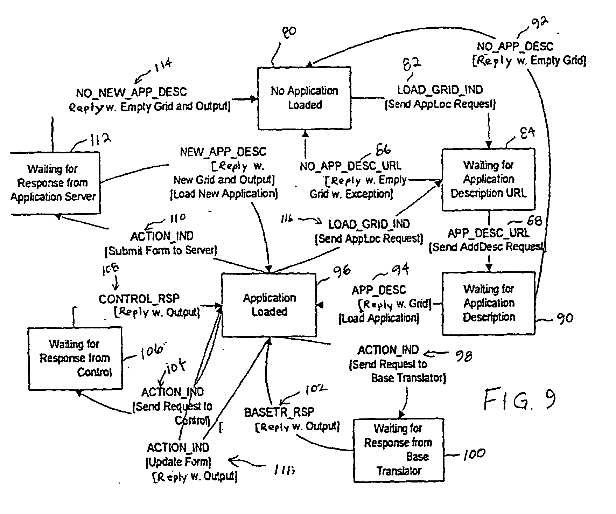

Referring now to FIGURE 9, there is illustrated a block diagram of a state machine for the electronic pen client 22. Initially, the electronic pen client 22 is in a no application loaded state 80. The electronic pen client 22 recognizes only one signal when in this state 80, namely a new grid request from the electronic pen 10. Such a request causes a load grid indication event 82. The electronic pen client 22 responds by sending a request to the name server 26 to translate a position contained within the new grid request into a URL where the application description can be found (i.e., in accordance with the find application location procedure). Next, the electronic pen client 22 enters a waiting for application description URL state 84. If no URL for the application description can be found (as indicated at 86), the electronic pen client 22 sends a new grid reply to the electronic pen 10, wherein the reply contains an empty grid description with a grid exception. As a result, the electronic pen client 22 returns to the no application loaded state 80.

If a URL for the application description is received from the name server 26 (as indicated at 88), the electronic pen client 22 sends a request to the application server 30 to retrieve the application description (i.e., in accordance with the get application description procedure). Accordingly, the electronic pen client 22 enters a waiting for application description state 90.

If the electronic pen client 22 does not receive an application description from the application server 30 (as indicated at 92), a new grid reply is sent by the electronic pen client 22 to the electronic pen 10 wherein the reply contains an empty grid. Thus, the electronic pen client 22 returns to the no application loaded state 80. If, however, the electronic pen client 22 does receive an application description from the application server 30 (as indicated at 94), the electronic pen client 22 sends a new grid reply to the electronic pen 10 containing a new grid description, and the electronic pen client 22 loads the application in its memory. In addition, the electronic pen client 22 moves into an application loaded state 96.

In the application loaded state 96, five types of actions can be received by the electronic pen client 22 from the electronic pen 10. First, a received action can include a request that the electronic pen client 22 cannot handle itself, in which case the electronic pen client 22 will send the action to the base translator 28 (as indicated at 98). The electronic pen client 22 then moves into a waiting for response from the base translator state 100. Once a base translator response 102 is received by the electronic pen client 22, the electronic pen client 22 updates a current form or other data associated with the currently loaded application and sends an action reply to the electronic pen 10 with appropriate output information.

Another type of action that the electronic pen client 22 can receive from the electronic pen 10 is a request that should be forwarded to a control node 24. In such a case, the action is sent to a control URL specified in the application description (as indicated at 104), and the electronic pen client 22 enters a waiting for response from the control state 106. Once a response is received from the control (as indicated at 108), the electronic pen client 22 sends an action reply to the electronic pen 10 with appropriate output information.

A third type of action is a submit form request, in response to which the electronic pen client 22 will submit the current form to the application server 30 that is identified by the URL in the application description (as indicated at 110). The electronic pen client 22 then enters a waiting for response from the application server state 112. If the application server 30 responds by sending an empty application description to the electronic pen client 22 (as indicated at 114), the current application is unloaded from the electronic pen client 22 and an action reply is sent to the electronic pen 10 with an empty grid. As a result, the electronic pen client 22 returns to the no application loaded state 80. On the other hand, if the application server 30 responds with a non-empty application description, the old application is unloaded from the electronic pen client 22, the new application description is parsed and loaded in the electronic pen client 22, an action reply is sent to the electronic pen 10 with a new grid description and with appropriate output information, and finally the electronic pen client 22 returns to the application loaded state 96.

A fourth type of action that can be received by the electronic pen client 22 from the electronic pen 10 is a request to load a new grid. This action occurs, for example, when a position outside of the current grid is detected by the electronic pen 10. When a new grid request is received, the electronic pen client 22 sends a request to the name server 26 (as indicated at 116) and the electronic pen client 22 returns to the waiting for application description URL state 84.

Finally, a fifth type of action that can be received by the electronic pen client 22 is an action that the electronic pen client 22 can handle itself, in which case the electronic pen client 22 updates the current form and sends an action reply to the electronic pen 10 with appropriate output information (as indicated at 118). The electronic pen client 22 then remains in the application loaded state 96. One type of action that the electronic pen client 22 might be able to handle itself is a local application. For example, the electronic pen client 22 might be capable of performing certain basic functions that are defined by a local application. Thus, when the electronic pen client 22 receives a new grid request, the position associated with the new grid request can be analyzed to determine if it corresponds to a local application. If so, the electronic pen client 22 can load the application description from its local memory, send a new grid description to the electronic pen 10 without having to communicate with the name server 26 or the application server 30.

Another action that might be handled locally by the electronic pen client 22 relates to the selection of fields within a form. When the electronic pen client 22 receives an action, the field that corresponds to that action receives focus. When this occurs, the electronic pen client 22 might display the field's value on its display or output the value by audio. In addition, the electronic pen client 22 might allow the user to edit the value of the field by means other than the electronic pen 10. Yet another type of action that might be handled by the electronic pen client 22 itself are actions that relate to a clipboard function. When a "copy" field is selected, the value of the field that had focus at the time the copy field was selected is transferred to the clipboard. Similarly, when a "paste" field is selected, the value stored in the clipboard is transferred to the field that had focus at the time the paste field was selected.

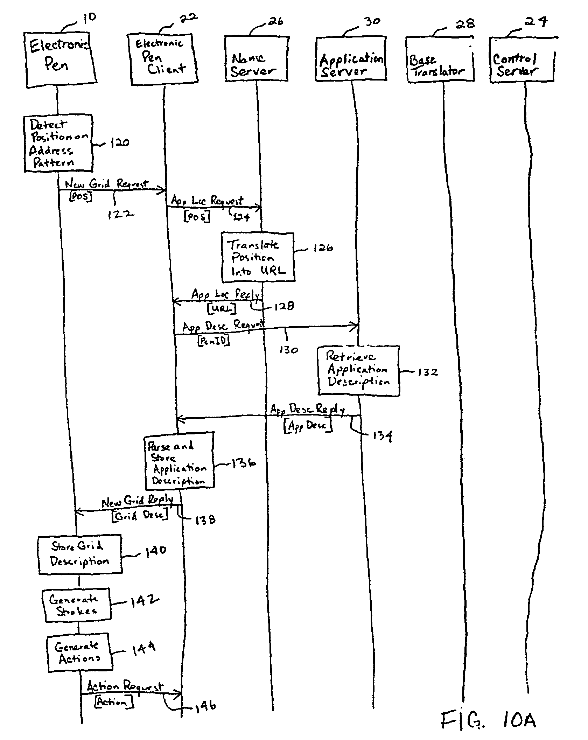

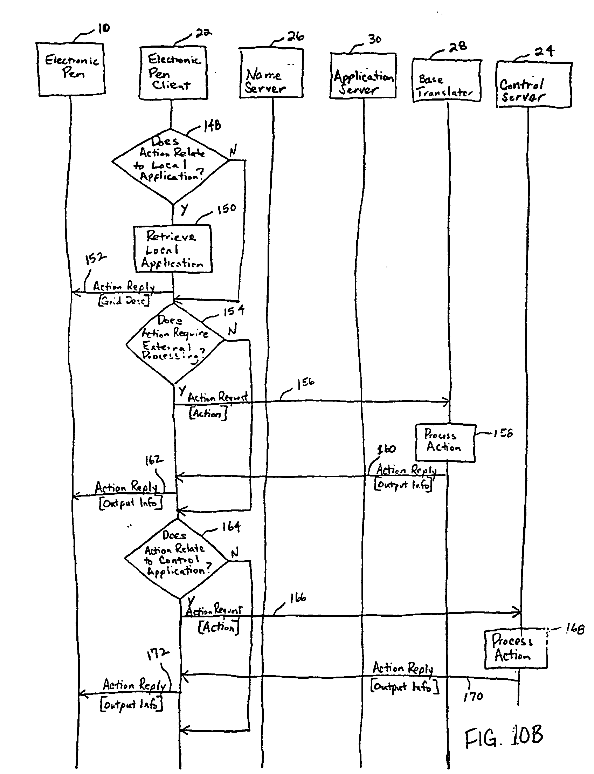

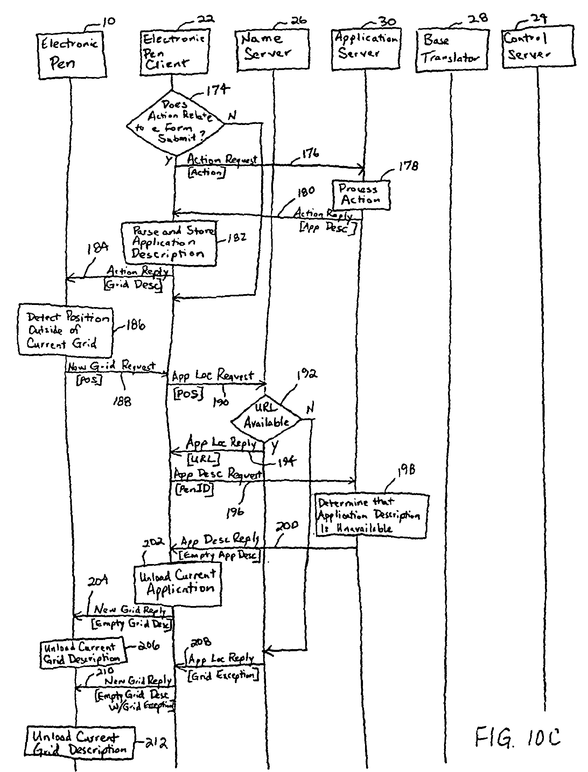

Referring now to FIGURES 10A through 10C, there is shown, by way of example, a message flow and signaling diagram illustrating the operation of the electronic pen system 2 depicted in and discussed in connection with FIGURE 2. Initially, the electronic pen 10 detects a first position on the address pattern at step 120 (e.g., at a location on a sheet of paper designated for composing and sending e-mails). At this stage, it is assumed that the electronic pen 10 is in a no grid loaded state. Thus, in response to the detection of the first position, the electronic pen 10 sends a new grid request 122, which contains the detected position information, to the electronic pen client 22. As a result, the electronic pen client 22 sends an application location request 124 containing the detected position information to the name server 26, at step 126. The name server 26 translates the detected position into a URL where an application description that corresponds to the detected position can be found (e.g., a URL address for a server containing an e-mail application), and returns an application location reply 128 containing the retrieved URL to the electronic pen client 22.

The electronic pen client 22 then sends an application description request 130, which contains the unique pen ID for the electronic pen 10, to the application server 30. The application server 30 retrieves the application description at step 132 and sends an application description reply 134 containing the retrieved application description to the electronic pen client 22. The electronic pen client 22 then parses and stores the application description at step 136. This step further involves generating a current grid description from the application description and sending the grid description to the electronic pen 10 in a new grid reply 138. The electronic pen 10 stores the received grid description at step 140 and resumes processing of the detected positions. Using the detected positions and the information in the grid description (e.g., so that the electronic pen 10 knows which fields of the e-mail form are being filled in), the electronic pen 10 generates strokes at step 142 and generates actions at step 144 using the stroke engine 52 and action engine 56 shown in FIGURE 7.

Each time an action is generated that cannot be handled by the electronic pen 10 itself, an action request 146 containing a description of the action is sent from the electronic pen 10 to the electronic pen client 22. At this point, the electronic pen client 22 should determine what type of action has been received so that it can respond to the action in an appropriate manner. First, it is determined whether the action requires the attention of, or otherwise should be processed in accordance with, a local application at step 148. Very basic applications or frequently used applications (e.g., delete entered text), for example, might be stored locally to avoid having to contact another entity. In such a case, the electronic pen client 22 retrieves the local application at step 150 and sends an action reply 152, which can contain a new grid description or other appropriate information.

However, if it is determined at step 148 that the received action does not relate to a local application, the process continues at step 154 where it is determined whether the received action requires processing by an external translator (e.g., handwriting recognition). If so, an action request 156 containing a description of the action is sent by the electronic pen client 22 to the base translator 28. The base translator 28 processes the action at step 158 and sends an action reply 160 containing output information responsive to the received action (e.g., text corresponding to written characters) to the electronic pen client 22, which can forward the output information to the electronic pen 10 in an action reply 162, if necessary.

If it is determined at step 154 that the received action does not require processing by an external translator, it is next determined whether the action relates to a control application at step 164. If so, an action request 166 containing a description of the action is sent by the electronic pen client 22 to the control server 24. The control server 24 processes the received action at step 168, if a response is necessary, and returns output information responsive to the received action in an action reply 170, which is forwarded from the electronic pen client 22 to the electronic pen 10 in an action reply 172.

Assuming that it is determined at step 164 that the received action does not relate to a control function, it is next determined whether the action comprises a request to submit a form at step 174 (e.g., a selection of a "send" area on the e-mail form). If so, an action request 176 containing the data entered onto the form is sent by the electronic pen client 22 to the application server 30. The application server 30 processes the form at step 178 and sends an action reply 180 containing a new application description (or an empty application description) to the electronic pen client 22. The electronic pen client 22 parses and stores the new application description at step 182 and generates a new grid description from the newly received application description. The electronic pen client 22 then sends an action reply 184 containing the new grid description. Although not illustrated in the figure, the electronic pen 10 will typically respond to the receipt of a new grid description by unloading its current grid description and loading the new grid description into its memory.

At some point, it is assumed that the electronic pen 10 detects a position that is outside of the currently loaded grid at step 186. In response to such an event, the electronic pen 10 sends a new grid request 188 containing the newly detected position data to the electronic pen client 22. In response, the electronic pen client 22 again generates an application location request 190 containing the detected position data and sends the request to the name server 26. The name server 26 determines whether a URL for an application description that corresponds to the newly detected position is available at step 192.

If so, the name server 26 sends an application location reply 194 containing a retrieved URL to the electronic pen client 22, which in turn sends an application description request 196 containing the unique pen ID for the electronic pen 10 to the application server 30 at the identified URL address, just as previously discussed in connection with messages 128 and 130. In this case, however, it is assumed that the application server 30 determines that the requested application description is unavailable at step 198. As a result, the application server 30 sends an application description reply to the electronic pen client 22 containing an empty application description. In response to the receipt of an empty application description, the electronic pen client 22 unloads the current application at step 202 and sends a new grid reply 204 containing an empty grid description to the electronic pen 10. The electronic pen 10 responds to the receipt of the empty grid description by unloading the current grid description at step 206.

Another possibility is that the name server 26 determines at step 192 that a URL corresponding to the detected position is not available. In this situation, the name server 26 sends an application location reply 208 to the electronic pen client 22. The reply 208 may simply be empty to indicate that a URL is not available. Preferably, however, the reply 208 contains a grid exception defining the largest area possible around the detected position for which there is no corresponding URL. In response to the reply 208, the electronic pen client 22 sends a new grid reply 210 containing an empty grid description with a grid exception. Upon receiving the reply 210, the electronic pen 10 unloads the current grid description at step 212. Furthermore, assuming that the electronic pen 10 receives and recognizes the grid exception information, the electronic pen 10 may subsequently be able to determine that certain detected positions on the address pattern are not associated with any application without having to send a request to the name server 26 or the application server 30.

To implement the electronic pen 10, there should be some type of mechanism for allowing the electronic pen 10 to determine when to attempt to detect an address pattern, when to store detected positional information, and/or when to forward or transmit the detected positions to the electronic pen client 22. In addition, it is also desirable to allow a user of the electronic pen 10 to select between inking mode, wherein the electronic pen 10 writes ink or other markings on the paper or other surface with which the tip of the pen 10 comes into contact, and a non-inking mode, wherein the electronic pen 10 does not leave ink marks when the tip of the electronic pen 10 comes into contact with paper or other surfaces.

In accordance with the present invention, it is possible to turn the inking function of the electronic pen 10 on and off. In particular, a user of the electronic pen 10 can use the pen 10 with an ink cartridge extended in a writing position or with the ink cartridge retracted so that the electronic pen 10 does not leave ink markings. The ability to use the pen 10 with its inking function turned on allows users to keep a paper copy of any drawings, handwritten text, or other markings made with their electronic pen 10, while the ability to use the pen 10 in the non-inking mode facilitates use of the pen in connection with reusable or public data entry sheets or other public or reusable surfaces.

In another aspect of the invention, the electronic pen 10 can be used to navigate on a mobile phone 14 or other electronic device, such as a PDA, laptop computer, or personal computer, or to manipulate, enter, or delete data by writing on a specially formatted paper. In particular, the electronic pen 10 can relay the written information to the mobile phone 14 or other electronic device. This use of the electronic pen 10 and specially formatted paper permits most messaging and telecommunications control functions to be performed in a user friendly manner without the use of other devices. Moreover, actions resulting from the use of the electronic pen 10 and specially formatted paper can be represented on a display of the mobile phone 14, PDA, or computer.

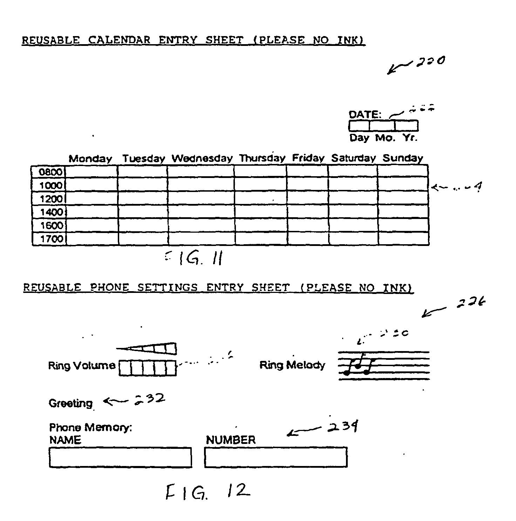

For example, there is illustrated in FIGURE 11, a reusable calendar entry sheet 220. It is assumed that the calendar entry sheet 220 is printed on a paper that includes a portion of the address pattern (not shown). Preferably, the address pattern is either not visible to the human eye or is only faintly visible so that the address pattern does not present a significant distraction to users. The sensor in the electronic pen 10, however, can detect the address pattern, and therefore, the precise position of the pen 10 at any given time can be determined, even when the pen is in a non-inking mode. Accordingly, when the electronic pen 10 is used to fill in a date field 222, the motion of the electronic pen 10 over the address pattern can be detected. Then, based on an analysis of the strokes, the handwritten date can be stored and/or converted into text. Similarly, appointment information or other data can be written in the appropriate fields of the calendar 224. By storing the detected positions, generating strokes based on the detected positions, and generating actions based on the strokes, the information written on the calendar can automatically be stored in a calendar application database (located, e.g., in a mobile phone 14 or in a remote server) associated with the user of the electronic pen 10. If desired, information can also be manipulated or deleted in a similar manner. Because the electronic pen 10 is preferably used in a non-inking mode, the calendar entry sheet 220 can be reused. Furthermore, the same types of functions can be used to enter, delete, and manipulate data in a electronic phone book, task list, or scheduler.

Referring now to FIGURE 12, there is illustrated an example of a reusable phone settings entry sheet 226. As with the previous example, it is assumed that the reusable phone settings entry sheet 226 is intended to be used when the electronic pen 10 is in a non-inking mode. Thus, by simply touching the electronic pen 10 to a desired setting in a ring volume field 228, the ring volume of a phone associated with, or otherwise selected by, the electronic pen 10, can be set. In addition, the electronic pen 10 can be used to select various other setting fields, such as a ring melody field 230, a greeting field 232, a phonebook entry field 234 for entering names and numbers into the phone internal memory, and fields relating to any other desired settings. When the electronic pen 10 is used to select or to enter information into these fields, such selections or entered information can be transmitted by the electronic pen 10 to the electronic pen client 22 contained within, for instance, a mobile phone 14.

Although the invention is described primarily in connection with a reusable calendar sheet 220 and a reusable phone setting entries sheet 226 in a non-inking mode, the invention is not limited to these applications. Instead, the electronic pen 10 can also be used for such data entry and storage when it is in an inking mode and can be used in connection with specially formatted paper to input any type of printed text or pattern in either the inking or non-inking mode. For example, the electronic pen 10 and an appropriately formatted paper or papers could also be used for navigating on a phone menu, dialing a number by writing it in a predefined "dialing" field, writing a message that is converted to a short message service (SMS) message or email message in the phone or in the electronic pen client 22, or saving notes in the phone 14 or in the electronic pen client 22 in the form of graphical or ASCII text, characters, and/or pictures. Similarly, the preprinted paper can comprise a calendar, phone book, or other type of personal information manager application, or the preprinted paper can be formatted to facilitate entry of settings in a phone, personal computer, or other electronic device capable of communicating with electronic pen 10.

In accordance with another aspect of the present invention, the electronic pen 10 includes a paper touch sensor, or force sensitive detector, for determining when the electronic pen 10 is in contact with the paper. Preferably, the paper touch sensor is used to enable and disable the position sensing mechanism in the electronic pen 10 depending upon whether the electronic pen 10 is in contact with either a paper or other surface, regardless of whether the electronic pen 10 is in an inking or non-inking mode. For example, the paper touch sensor can be used to enable the position FIFO Block 38 shown in FIGURE 7 when it senses that the electronic pen 10 is in contact with a paper or other surface and can be used to disable the position FIFO Block 38 when the paper touch sensor detects that the electronic pen 10 is not in contact with any surface. Accordingly, the electronic pen 10 will detect positions and generate strokes and actions only when the paper touch sensor detects that the electronic pen 10 is in contact with a paper or other surface.

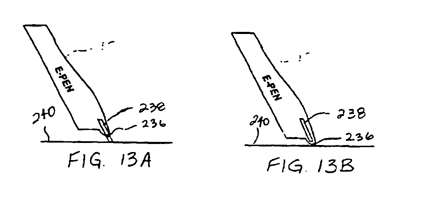

Referring now to FIGURES 13A and 13B, there is illustrated an electronic pen 10 having a paper touch sensor 236 for detecting whether the electronic pen 10 is in contact with a paper 240 or other surface regardless of whether an ink cartridge 238 is in an extended, or ink-on, position (FIGURE 13A) or in a retracted, or ink-off, position (FIGURE 13B). Alternatively, instead of using an ink cartridge 238, the electronic pen 10 can utilize a pencil lead, a felt-tip marker, or any other type of marking tip for writing on paper or other surfaces.

And yet another aspect of the present invention, the electronic pen 10 can be used to perform a mouse function. Accordingly, the electronic pen 10 can be used for navigation purposes (e.g., in a navigation field) when the paper touch sensor 236 detects that the electronic pen 10 is in contact with a paper 240 or other surface. In addition, a selection at a particular location can be indicated by "clicking" the tip of the electronic pen 10 against the paper 240 or other surface either by tapping the tip of the electronic pen 10 against the paper 240 or other surface or by pressing the tip of the electronic pen tip against the paper 240 or other surface with additional force (i.e., a force greater than a predetermined threshold force). When using the electronic pen 10 to perform a mouse-like function, the ability to retract the ink cartridge 238 provides an additional benefit in that the electronic pen 10 is not writing and the ink cartridge 238 is not damaged when the user "clicks" the electronic pen 10.

Although various preferred embodiments of the method and apparatus of the present invention have been illustrated in the accompanying Drawings and described in the foregoing Detailed Description, it is understood that the invention is not limited to the embodiments disclosed, but is capable of numerous rearrangements, modifications, and substitutions without departing from the invention as set forth and defined by the following claims. Furthermore, it shall be understood that the terms "comprises" and "comprising," when used in the foregoing Detailed Description and the following claims, specifies the presence of stated features, elements, steps, or components but does not preclude the presence or addition of one or more other features, elements, steps, components, or groups thereof.

## Claims

1. An electronic reading device (10), comprising:
an optical detector for detecting positional data for the electronic reading device with respect to an address pattern of a specially formatted surface (240); and
a sensor (236) comprising a force sensitive detector for sensing whether the electronic reading device (10) is in contact with the specially formatted surface (240), wherein the detection of positional data by the optical detector is enabled at least when the sensor (236) determines that the electronic reading device (10) is in contact with the specially formatted surface with a certain contact force ;
**characterised in that** the sensor (236) is adapted to further detect a user selection of a location on the address pattern in response to a detection of an additional contact force between the electronic reading device (10) and the specially formatted surface (240) wherein said additional contact force is greater than a predetermined threshold force.

2. The electronic reading device (10) of claim 1, wherein the detection of positional data by the optical detector is disabled when the sensor (236) determines that the electronic reading device (10) is not in contact with the specially formatted surface (240).

3. The electronic reading device (10) of claim 1, further comprising a buffer for storing the detected positional data, wherein the storing of the detected positional data is disabled when the sensor (236) determines that the electronic reading device (10) is not in contact with the specially formatted surface (240).

4. The electronic reading device (10) of claim 1, further comprising a local wireless link transmitter for transmitting the detected positional data to a separate electronic device, wherein the transmission of the detected positional data is disabled when the sensor determines that the electronic reading device (10) is not in contact with the specially formatted paper (240).

5. The electronic reading device (10) of claim 1, further comprising a writing means (238) that can be selectively activated and deactivated, wherein the sensor (236) operates to detect contact of the electronic reading device (10) with the specially formatted surface (240) both when the writing means (238) is activated and when the writing means (238) is deactivated.

6. The electronic reading device (10) of claim 1, further comprising a writing means (238) for writing on surfaces, wherein the writing means (238) can be selectively activated and deactivated, the optical detector being capable of detecting positional data whether the writing means (238) is activated or deactivated.

7. The electronic reading device (10) of claim 6, for use with a specially formatted surface (240) preprinted with at least one data entry field, wherein the optical detector facilitates entry of information corresponding to the at least one data entry field.

8. A system for electronic entry of information, comprising:
a specially formatted surface (240) including an address pattern, wherein a particular position on the address pattern can be determined based on an examination of only a portion of the address pattern; and
an electronic reading device (10) as claimed in one of claims 1 to 7.

9. The system of claim 8, wherein the specially formatted surface (240) comprises a paper preprinted with at least one data entry field.

10. The system of claim 9, wherein the electronic reading device (10) further comprises a processor for receiving positional data and determining a particular position of the electronic reading device (10) relative to the address pattern when the sensor (236) detects contact between the electronic reading device (10) and the specially formatted surface, wherein the processor identifies the preprinted paper based on the determined particular position.

11. The system of claim 9, wherein the processor converts a plurality of determined positions within the at least one data entry field into a data entry for the at least one data entry field.

12. The system of claim 9, wherein the electronic reading device (10) further includes a writing means (238) that can be selectively activated and deactivated, and wherein the preprinted paper comprises a reusable preprinted paper for use when the writing means (238) is in a deactivated mode.

13. The system of claim 9, wherein the preprinted paper comprises a form for entering information relating to a personal information manager application.

14. The system of claim 9, wherein the preprinted paper comprises a form for entering settings for an electronic device.

15. A method for using an electronic reading device (10), comprising the steps of:
sensing whether the electronic reading device (10) is contacting a specially formatted surface (240) using a touch sensor (236);
detecting positional data for the electronic reading device (10) relative to an address pattern of the specially formatted surface (240);
storing the positional data when the touch sensor (236) detects that the electronic reading device (10) is contacting the specially formatted surface (240) with a certain contact force;
**characterised in that** the method further comprises:
detecting a user selection of a location on the specially formatted surface (240) of the address pattern in response to the detection of an additional contact force between the electronic reading device (10) and the specially formatted surface (240) wherein said additional contact force is greater than a predetermined threshold force.

16. The method of claim 15, further comprising the step of selecting between an activated writing mode and a deactivated writing mode for the electronic reading device (10).

17. The method of claim 16, wherein the step of selecting comprises selecting the deactivated writing mode.

18. The method of claim 17, wherein the specially formatted surface (240) comprises a reusable data entry paper for a selected application, further comprising the step of using the electronic reading device (10) in the deactivated writing mode in connection with the reusable data entry paper to enter data relating to the selected application.

19. The method of claim 18, wherein the selected application comprises a personal information manager.

20. The method of claim 18, wherein the selected application facilitates an entry of settings on an electronic device.

21. The method of claim 15, further comprising the step of identifying the specially formatted surface (240) based on the positional data.

## Patentansprüche

1. Elektronische Lesevorrichtung (10), umfassend:
einen optischen Detektor zum Erfassen von Positionsdaten für die elektronische Lesevorrichtung in Bezug auf ein Adressmuster einer speziell formatierten Oberfläche (240); und
einen Sensor (236), umfassend einen druckempfindlichen Detektor zum Abtasten, ob die elektronische Lesevorrichtung (10) mit der speziell formatierten Oberfläche (240) in Kontakt ist, wobei die Erfassung von Positionsdaten durch den optischen Detektor mindestens aktiviert ist, wenn der Sensor (236) bestimmt, dass die elektronische Lesevorrichtung (10) mit der speziell formatierten Oberfläche mit einem gewissen Kontaktdruck in Kontakt ist;
**gekennzeichnet dadurch, dass** der Sensor (236) angepasst ist, ferner eine Benutzerauswahl eines Standorts auf dem Adressmuster als Reaktion auf eine Erfassung eines zusätzlichen Kontaktdrucks zwischen der elektronischen Lesevorrichtung (10) und der speziell formatierten Oberfläche (240) zu erfassen, wobei der zusätzliche Kontaktdruck größer als ein vorbestimmter Schwellendruck ist.

2. Elektronische Lesevorrichtung (10) nach Anspruch 1, wobei die Erfassung von Positionsdaten durch den optischen Detektor deaktiviert ist, wenn der Sensor (236) bestimmt, dass die elektronische Lesevorrichtung (10) mit der speziell formatierten Oberfläche (240) nicht in Kontakt ist.

3. Elektronische Lesevorrichtung (10) nach Anspruch 1, ferner umfassend einen Puffer zum Speichern der erfassten Positionsdaten, wobei das Speichern der erfassten Positionsdaten deaktiviert ist, wenn der Sensor (236) bestimmt, dass die elektronische Lesevorrichtung (10) mit der speziell formatierten Oberfläche (240) nicht in Kontakt ist.

4. Elektronische Lesevorrichtung (10) nach Anspruch 1, ferner umfassend einen lokalen drahtlosen Linksender zum Übertragen der erfassten Positionsdaten zu einer getrennten elektronischen Vorrichtung, wobei die Übertragung der erfassten Positionsdaten deaktiviert ist, wenn der Sensor bestimmt, dass die elektronische Lesevorrichtung (10) mit dem speziell formatierten Papier (240) nicht in Kontakt ist.

5. Elektronische Lesevorrichtung (10) nach Anspruch 1, ferner umfassend ein Schreibmittel (238), das selektiv aktiviert und deaktiviert werden kann, wobei der Sensor (236) arbeitet, um Kontakt der elektronischen Lesevorrichtung (10) mit der speziell formatierten Oberfläche (240) zu erfassen, sowohl wenn das Schreibmittel (238) aktiviert ist als auch wenn das Schreibmittel (238) deaktiviert ist.

6. Elektronische Lesevorrichtung (10) nach Anspruch 1, ferner umfassend ein Schreibmittel (238) zum Schreiben auf Oberflächen, wobei das Schreibmittel (238) selektiv aktiviert und deaktiviert werden kann, wobei der optische Detektor zum Erfassen von Positionsdaten fähig ist, ob das Schreibmittel (238) aktiviert oder deaktiviert ist.

7. Elektronische Lesevorrichtung (10) nach Anspruch 6 zur Verwendung mit einer speziell formatierten Oberfläche (240), vorbedruckt mit mindestens einem Dateneintragsfeld, wobei der optische Detektor einen Eintrag von Information entsprechend dem mindestens einen Dateneintragsfeld erleichtert.

8. System für einen elektronischen Eintrag von Information, umfassend:
eine speziell formatierte Oberfläche (240), inkludierend ein Adressmuster, wobei eine bestimmte Position auf dem Adressmuster basierend auf einer Untersuchung von nur einem Abschnitt des Adressmusters bestimmt werden kann;
eine elektronische Lesevorrichtung (10), wie in einem der Ansprüche 1 bis 7 beansprucht.

9. System nach Anspruch 8, wobei die speziell formatierte Oberfläche (240) ein Papier umfasst, das mit mindestens einem Dateneintragsfeld vorbedruckt ist.

10. System nach Anspruch 9, wobei die elektronische Lesevorrichtung (10) ferner einen Prozessor umfasst zum Empfangen von Positionsdaten und Bestimmen einer besonderen Position der elektronischen Lesevorrichtung (10) bezüglich des Adressmusters, wenn der Sensor (236) Kontakt zwischen der elektronischen Lesevorrichtung (10) und der speziell formatierten Oberfläche erfasst, wobei der Prozessor das vorbedruckte Papier basierend auf der bestimmten besonderen Position identifiziert.

11. System nach Anspruch 9, wobei der Prozessor eine Vielzahl von bestimmten Positionen innerhalb des mindestens einen Dateneintragsfelds in einen Dateneintrag für das mindestens eine Dateneintragsfeld konvertiert.

12. System nach Anspruch 9, wobei die elektronische Lesevorrichtung (10) ferner ein Schreibmittel (238) inkludiert, das selektiv aktiviert und deaktiviert werden kann, und wobei das vorbedruckte Papier ein wiederverwendbares vorbedrucktes Papier zur Verwendung umfasst, wenn das Schreibmittel (238) in einem deaktivierten Modus ist.

13. System nach Anspruch 9, wobei das vorbedruckte Papier eine Form zum Eingeben von Information bezüglich einer persönlichen Informationsverwalteranwendung umfasst.

14. System nach Anspruch 9, wobei das vorbedruckte Papier eine Form zum Eingeben von Einstellungen für eine elektronische Vorrichtung umfasst.

15. Verfahren zum Verwenden einer elektronischen Lesevorrichtung (10), die Schritte umfassend:
Abtasten, ob die elektronische Lesevorrichtung (10) eine speziell formatierte Oberfläche (240) kontaktiert, unter Verwendung eines Berührungssensors (236);
Erfassen von Positionsdaten für die elektronische Lesevorrichtung (10) bezüglich eines Adressmusters der speziell formatierten Oberfläche (240);
Speichern der Positionsdaten, wenn der Berührungssensor (226) erfasst, dass die elektronische Lesevorrichtung (10) die speziell formatierte Oberfläche (240) mit einem gewissen Kontaktdruck kontaktiert;
**gekennzeichnet dadurch, dass** das Verfahren ferner umfasst:
Erfassen einer Benutzerauswahl eines Standorts auf der speziell formatierten Oberfläche (240) des Adressmusters als Reaktion auf die Erfassung eines zusätzlichen Kontaktdrucks zwischen der elektronischen Lesevorrichtung (10) und der speziell formatierten Oberfläche (240), wobei der zusätzliche Kontaktdruck größer als ein vorbestimmter Schwellendruck ist.

16. Verfahren nach Anspruch 15, ferner umfassend den Schritt zum Auswählen zwischen einem aktivierten Schreibmodus und einem deaktivierten Schreibmodus für die elektronische Lesevorrichtung (10).

17. Verfahren nach Anspruch 16, wobei der Schritt zum Auswählen eine Auswahl des deaktivierten Schreibmodus umfasst.

18. Verfahren nach Anspruch 17, wobei die speziell formatierte Oberfläche (240) ein wiederverwendbares Dateneintragspapier für eine ausgewählte Anwendung umfasst, ferner umfassend den Schritt zum Verwenden der elektronischen Lesevorrichtung (10) in einem deaktivierten Schreibmodus in Verbindung mit dem wiederverwendbaren Dateneintragspapier, um Daten bezüglich der ausgewählten Anwendung einzugeben.

19. Verfahren nach Anspruch 18, wobei die ausgewählte Anwendung einen persönlichen Informationsverwalter umfasst.

20. Verfahren nach Anspruch 18, wobei die ausgewählte Anwendung einen Eintrag von Einstellungen in einer elektronischen Vorrichtung erleichtert.

21. Verfahren nach Anspruch 15, ferner umfassend den Schritt zum Identifizieren der speziell formatierten Oberfläche (240) basierend auf den Positionsdaten.

## Revendications

1. Dispositif de lecture électronique (10), comportant :
un détecteur optique destiné à détecter des données de position pour le dispositif de lecture électronique par rapport à un motif d'adresse d'une surface spécialement formatée (240) ; et
un capteur (236) comportant un détecteur sensible à une force destinée à détecter si le dispositif de lecture électronique (10) est en contact avec la surface spécialement formatée (240), dans lequel la détection de données de position par le détecteur optique est validée au moins lorsque le capteur (236) détermine que le dispositif de lecture électronique (10) est en contact avec la surface spécialement formatée sous une certaine force de contact ;
**caractérisé en ce que** le capteur (236) est conçu pour détecter en outre un choix par un utilisateur d'un emplacement sur le motif d'adresse en réponse à une détection d'une force de contact supplémentaire entre le dispositif de lecture électronique (10) et la surface spécialement formatée (240), dans lequel ladite force de contact supplémentaire est supérieure à une force prédéterminée de seuil.

2. Dispositif de lecture électronique (10) selon la revendication 1, dans lequel la détection de données de position par le détecteur optique est invalidée lorsque le capteur (236) détermine que le dispositif de lecture électronique (10) n'est pas en contact avec la surface spécialement formatée (240).

3. Dispositif de lecture électronique (10) selon la revendication 1, comportant en outre un tampon destiné à stocker les données de position détectées, dans lequel le stockage des données de position détectées est invalidé lorsque le capteur (236) détermine que le dispositif de lecture électronique (10) n'est pas en contact avec la surface spécialement formatée (240).

4. Dispositif de lecture électronique (10) selon la revendication 1, comportant en outre un émetteur local de liaison sans fil destiné à transmettre les données de position détectée à un dispositif électronique séparé, dans lequel la transmission des données de position détectée est invalidée lorsque le capteur détermine que le dispositif de lecture électronique (10) n'est pas en contact avec le papier spécialement formaté (240).

5. Dispositif de lecture électronique (10) selon la revendication 1, comportant en outre un moyen d'écriture (238) qui peut être activé et désactivé sélectivement, dans lequel le capteur (236) fonctionne de façon à détecter un contact du dispositif de lecture électronique (10) avec la surface spécialement formatée (240) aussi bien lorsque le moyen d'écriture (238) est activé que lorsque le moyen d'écriture (238) est désactivé.

6. Dispositif de lecture électronique (10) selon la revendication 1, comportant en outre un moyen d'écriture (238) destiné à écrire sur des surfaces, dans lequel le moyen d'écriture (238) peut être sélectivement activé et désactivé, le détecteur optique étant capable de détecter des données de position que le moyen d'écriture (238) soit activé ou qu'il soit désactivé.

7. Dispositif de lecture électronique (10) selon la revendication 6, pour une utilisation avec une surface spécialement formatée (240) préalablement imprimée avec au moins un champ d'entrée de données, dans lequel le détecteur optique facilite l'entrée d'une information correspondant au, au moins un, champ d'entrée de données.

8. Système pour l'entrée électronique d'informations, comportant :
une surface spécialement formatée (240) comprenant un motif d'adresses, dans lequel une position particulière sur le motif d'adresse peut être déterminée sur la base d'un examen de seulement une partie du motif d'adresse ; et
un dispositif de lecture électronique (10) selon l'une des revendications 1 à 7.

9. Système selon la revendication 8, dans lequel la surface spécialement formatée (240) comprend un papier préimprimé avec au moins un champ d'entrée de données.

10. Système selon la revendication 9, dans lequel le dispositif de lecture électronique (10) comporte en outre un processeur destiné à recevoir des données de position et à déterminer une position particulière du dispositif de lecture électronique (10) par rapport au motif d'adresse lorsque le capteur (236) détecte un contact entre le dispositif de lecture électronique (10) et la surface spécialement formatée, dans lequel le processeur identifie le papier préimprimé sur la base de la position particulière déterminée.

11. Système selon la revendication 9, dans lequel le processeur convertit plusieurs positions déterminées à l'intérieur du, au moins un, champ d'entrée de données en une entrée de données pour le, au moins un, champ d'entrée de données.

12. Système selon la revendication 9, dans lequel le dispositif de lecture électronique (10) comporte en outre un moyen d'écriture (238) qui peut être sélectivement activé et désactivé, et dans lequel le papier préimprimé comprend un papier préimprimé réutilisable destiné à être utilisé lorsque le moyen d'écriture (238) est dans un mode désactivé.

13. Système selon la revendication 9, dans lequel le papier préimprimé comprend un formulaire pour l'entrée d'informations concernant une application de gestion d'informations personnelles.

14. Système selon la revendication 9, dans lequel le papier préimprimé comprend un formulaire pour l'entrée de réglages pour un dispositif électronique.

15. Procédé pour l'utilisation d'un dispositif de lecture électronique (10), comprenant les étapes qui consistent :
à détecter si le dispositif de lecture électronique (10) est en contact avec une surface spécialement formatée (240) en utilisant un capteur tactile (236) ;
à détecter des données de position pour le dispositif de lecture électronique (10) relatives à un motif d'adresse de la surface spécialement formatée (240) ;
à stocker les données de position lorsque le capteur tactile (236) détecte que le dispositif de lecture électronique (10) est en contact avec la surface spécialement formatée (240) sous une certaine force de contact ;
**caractérisé en ce que** le procédé consiste en outre :
à détecter un choix par un utilisateur d'un emplacement sur la surface spécialement formatée (240) du motif d'adresse en réponse à la détection d'une force de contact supplémentaire entre le dispositif de lecture électronique (10) et la surface spécialement formatée (240), dans lequel ladite force de contact supplémentaire est supérieure à une force prédéterminée de seuil.

16. Procédé selon la revendication 15, comprenant en outre l'étape consistant à choisir entre un mode d'écriture activé et un mode d'écriture désactivé pour le dispositif de lecture électronique (10).

17. Procédé selon la revendication 16, dans lequel l'étape de choix consiste à choisir le mode d'écriture désactivé.

18. Procédé selon la revendication 17, dans lequel la surface spécialement formatée (240) comprend un papier d'entrée de données réutilisable pour une application choisie, comprenant en outre l'étape qui consiste à utiliser le dispositif de lecture électronique (10) dans le mode d'écriture désactivé en association avec le papier d'entrée de données réutilisable pour l'entrée de données concernant l'application choisie.

19. Procédé selon la revendication 18, dans lequel l'application choisie comprend un gestionnaire d'informations personnelles.

20. Procédé selon la revendication 18, dans lequel l'application choisie facilite l'entrée de réglages sur un dispositif électronique.

21. Procédé selon la revendication 15, comprenant en outre l'étape d'identification de la surface spécialement formatée (240) sur la base des données de position.
